Europäisches Patentamt

European Patent Office

Office européen des brevets

(19)

(11) Numéro de publication: **0 099 761**
**A2**

(12)

# DEMANDE DE BREVET EUROPEEN

(21) Numéro de dépôt: **83400326.1**

(22) Date de dépôt: **16.02.83**

(51) Int. Cl.³: **H 04 M 9/02**
**H 04 M 1/00**

(30) Priorité: **12.07.82 FR 8212169**

(43) Date de publication de la demande:
**01.02.84 Bulletin 84/5**

(84) Etats contractants désignés:
**AT BE DE FR GB IT LU NL SE**

(71) Demandeur: **COMPAGNIE GENERALE DE CONSTRUCTIONS TELEPHONIQUES Société Anonyme dite:**
**251, rue de Vaugirard**
**F-75740 Paris Cedex 15(FR)**

(72) Inventeur: **Meunier, Bernard Marie André**
**1 rue La Pérouse**
**F-78150 Le Chesnay(FR)**

(72) Inventeur: **Gradeler, Eric Jean**
**50 rue Violet**
**F-75015 Paris(FR)**

(74) Mandataire: **Loraux, Jean-Claude Georges**
**251, rue de Vaugirard**
**F-75740 Paris Cédex 15(FR)**

(54) **Circuit de couplage de ligne additionnelle à un poste d'intercommunication.**

(57) L'invention concerne un circuit de couplage de ligne additionnelle (ligne de signalisation) à un poste d'intercommunication.

Le circuit de couplage de l'invention comprend, intercalé entre la ligne additionnelle (LC) et le poste d'intercommunication (PI) un circuit de découplage en continu (CC) de la ligne ainsi que des moyens (OC1) couplés à l'un (*13*) des fils de la ligne pour transmettre des signaux sur la ligne (LC), et des moyens (OC2) connectés à l'un ou l'autre (*14*) des fils de ligne pour recevoir des signaux transmis sur la ligne.

L'invention est applicable dans les installations téléphoniques privées.

Croydon Printing Company Ltd

0099761

1

## Circuit de couplage de ligne additionnelle
## à un poste d'intercommunication.

La présente invention a pour objet un circuit
de couplage de ligne de signalisation à un poste d'intercommunication. Elle est applicable dans les installations
téléphoniques privées.

Certaines installation téléphoniques privées
comprennent des postes ordinaires et des postes d'intercommunication. A chacune des lignes réseau correspond sur
le poste d'intercommunication un élément d'affichage en
indiquant l'état, notamment si elle est libre ou occupée.
Les informations à ce sujet sont fournies au poste
d'intercommunication par une voie de signalisation qui
peut prendre la forme d'une ligne bifilaire servant
également à l'alimentation du poste. Le poste comprend
alors un processeur pour la commande des éléments
d'affichage et pour d'autres opérations de base telles
que l'identification et la signalisation de l'état des
touches dont il est pourvu. Les informations correspondantes sont transmises sur la voie de signalisation.
Les voies de signalisation des différents postes aboutissent
à un processeur d'intercommunication qui peut être le même
que le processeur de commande de l'installation téléphonique.

Certains des postes sont utilisés comme postes
de secours : en cas de panne de l'installation chaque
ligne réseau est connectée directement, par l'intermédiaire de contacts de relais de sécurité, à un poste dit poste de secours qui pourra ainsi continuer à émettre et à recevoir des appels pendant la durée de cette panne. On prévoit généralement autant de postes de secours que de lignes réseau.

Si le basculement d'une ligne réseau sur un poste ordinaire peut se faire sans précaution particulière, il n'en va pas de même du basculement d'une ligne réseau sur un poste d'intercommunication. En effet, ce poste est connecté par deux paires alimentées. Lorsqu'il est utilisé comme poste de secours, une de ces paires est directement connectée à une ligne réseau et est alors alimentée par la batterie du central public, alors que l'autre paire reste connectée au central privé et est donc alimentée par la batterie de celui-ci. Chacune de ces batteries a sa propre masse, qui n'est pas nécessairement au même potentiel que la masse de l'autre batterie. Un courant peut donc circuler entre ces batteries et apporter des perturbations gênantes.

L'invention a pour objet un circuit de couplage entre ces lignes et le poste d'intercommunication qui permet d'éviter de telles perturbations.

Le circuit de couplage de l'invention est caractérisé par le fait qu'il comprend, intercalé entre le poste d'intercommunication et la ligne de signalisation, ou ligne additionnelle, un circuit de découplage en continu de la ligne, ainsi que des moyens couplés à l'un des fils de la ligne pour transmettre des signaux sur cette ligne, et des moyens connectés à l'un ou l'autre des fils de ligne pour recevoir des signaux transmis sur la ligne.

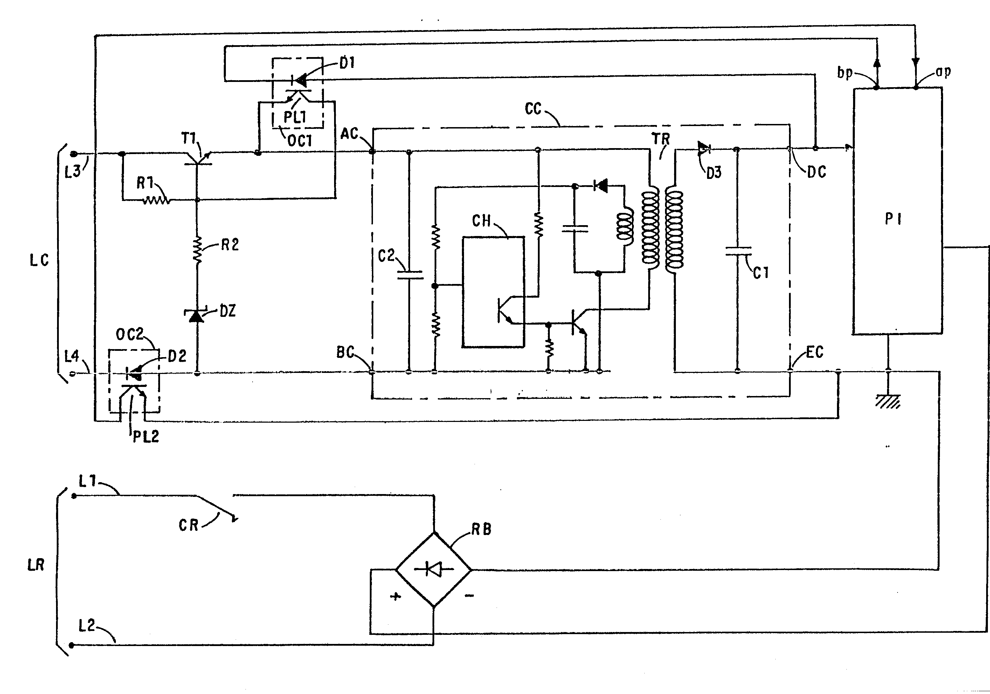

Les différents objets et caractéristiques de l'invention seront maintenant détaillés dans la description qui va suivre, donnée à titre d'exemple non limitatif, en se reportant à la figure annexée qui représente un exemple de réalisation du circuit de couplage de l'invention.

Sur la figure annexée un poste d'intercommunication PI est connecté à deux lignes LR et LC.

3

La ligne LR est une ligne privée ordinaire : elle se compose de deux fils 11 et 12 connectés aux entrées d'un pont redresseur RB via le crochet commutateur CR du poste. La sortie négative de ce pont fournit le potentiel de référence que l'on appellera la masse. La sortie positive de ce pont est connectée de façon connue à des circuits non représentés du poste PI, tels que le circuit de parole et le circuit de numérotation.

La ligne LC servant de voie de signalisation se compose de deux fils 13 et 14. Le fil 13 est connecté au collecteur d'un transistor T1 dont l'émetteur est connecté à une entrée AC d'un convertisseur continu-continu CC. L'électrode de base de ce transistor est connectée, d'une part, au fil de ligne 13 par l'intermédiaire d'une résistance R1 et, d'autre part, au collecteur d'un phototransistor PL1 d'un optocoupleur OC1. L'émetteur de ce phototransistor est connecté à l'émetteur du transistor T1.

Le fil 14 de la ligne LC est connecté à la cathode d'une diode électroluminescente D2 d'un optocoupleur OC2. L'anode de cette diode est connectée, d'une part, à une entrée BC du convertisseur continu-continu CC et, d'autre part, à l'électrode de base du transistor T1 via une diode à effet Zener DZ et une résistance R2 connectées en série.

L'émetteur du phototransistor PL2 de l'optocoupleur OC2 est connecté à la masse, le collecteur de ce transistor étant connecté à une entrée ap du poste PI.

Une sortie EC du convertisseur continu-continu CC est connectée à la masse, une autre sortie DC de ce convertisseur étant connectée, d'une part, à une entrée non référencée du poste PI pour l'alimentation, notamment, des circuits d'exploration des touches et des circuits d'affichage et, d'autre part, à l'anode de la diode électroluminescente D1 de l'optocoupleur OC1. La cathode de cette diode électroluminescente est connectée à une sortie bp du poste PI.

Le convertisseur continu-continu CC est un circuit du type connu qui ne sera pas décrit dans le détail. On rappellera cependant qu'un tel circuit, qui reçoit une tension continue entre ses entrées AC et BC, comprend notamment un condensateur C2 connecté entre ces entrées et un circuit hacheur CH dont l'étage de sortie fournit une tension alternative à un enroulement primaire d'un transformateur TR. Une tension alternative est donc fournie par l'enroulement secondaire de ce transformateur TR entre les sorties DC et EC. Cette tension est redressée et filtrée par une diode D3 et un condensateur C1. La diode D3 est connectée entre une extrémité de l'enroulement secondaire du transformateur TR et la sortie DC, le condensateur C1 étant connecté entre les sorties DC et EC du convertisseur CC.

L'emploi du convertisseur continu-continu CC comme élément de liaison entre la ligne LC et le poste PI permet donc bien, par l'intermédiaire du transformateur TR de ce convertisseur, d'assurer un découplage en courant continu de cette ligne, tout en transmettant au poste PI l'énergie véhiculée par ce courant continu.

En outre, sous la commande du microprocesseur du poste PI, l'envoi d'un signal de niveau 0 à la sortie bp rend la diode électroluminescente D1 de l'opto-coupleur OC1 passante. Elle émet un signal lumineux. Le phototransistor PL1 de cet optocoupleur conduit et se sature, et bloque le transistor T1 connecté en série avec le fil 13 : la boucle est ouverte. On peut donc bien transmettre des signaux du poste PI sur la ligne LC.

Les signaux reçus sur cette ligne sont détectés par la diode électroluminescente D2 de l'optocoupleur OC2. Ces signaux sont retransmis par le phototransistor PL2 de cet optocoupleur au poste PI.

Ainsi, le poste PI étant utilisé en poste de secours, on peut, en cas de panne, connecter la paire LR directement à une ligne réseau par un relais de sécurité non représenté, l'autre paire ou paire additionnelle, LC, utilisée comme voie de signalisation restant connectée au central privé. Le découplage en courant continu de cette ligne permet bien d'éviter d'éventuelles perturbations que ne manquerait pas de provoquer l'alimentation respective des deux lignes LR et LC par deux batteries distinctes. En outre, l'introduction des deux optocoupleurs OC1 et OC2 permet bien la transmission bidirectionnelle des signaux sur la voie de signalisation avec isolation électrique entre les deux lignes.

Il est bien évident que la description qui précède n'a été fournie qu'à titre d'exemple non limitatif et que de nombreuses variantes peuvent être envisagées sans sortir pour autant du cadre de l'invention.

REVENDICATIONS

1.    Circuit de couplage de ligne additionnelle à un poste d'intercommunication, caractérisé par le fait qu'il comprend, intercalé entre la ligne additionnelle (LC) et le poste d'intercommunication (PI) un circuit de découplage en continu (CC) de la ligne, ainsi que des moyens (OC1) couplés à l'un ($\underline{1}$3) des fils de la ligne pour transmettre des signaux sur la ligne (LC), et des moyens (OC2) connectés à l'un  ou l'autre ($\underline{1}$4) des fils de ligne pour recevoir des signaux transmis sur la ligne.

2.    Circuit tel que défini en 1, caractérisé par le fait que le circuit de découplage (CC) est un convertisseur continu-continu.

3.    Circuit tel que défini en 1, caractérisé par le fait que lesdits moyens (OC1) de transmission sont constitués d'un optocoupleur (OC1) comprenant un photo-transistor (PL1) qui commande un transistor (T1) connecté en série avec ledit fil ($\underline{1}$3)

4.    Circuit tel que défini en 1, caractérisé par le fait que lesdits moyens de réception sont constitués d'un optocoupleur (OC2) comprenant une diode électroluminescente (D2) connectée en série avec ledit fil ($\underline{1}$4).

ORIGINAL
Par procuration

J.-C. LORAUX

PL. UNIQUE

0099761